# FASCICULE DE BREVET EUROPEEN

(11) **EP 0 366 512 B1**
(45) Date de publication et mention de la délivrance du brevet: **28.04.1993**
(21) Numéro de dépôt: 89402745.7
(22) Date de dépôt: 04.10.1989
(51) Int. Cl.: H02G 1/12

(54) **Outil pour le dénudage de câbles**
Kabelentmantelungswerkzeug
Cable stripping tool

(30) Priorité: 27.10.1988 FR 8814052
(43) Date de publication de la demande: 02.05.1990
(73) Titulaire: Mazzetti-Pinchon, Renée Marie Henriette, 72610 Saint-Paterne (FR); Hamard-Pinchon, Christiane Yvonne Marcelle, 92260 Fontenay-aux-Roses (FR); Berson-Pinchon, Nicole Marthe Andrée, 61190 Tourouvre (FR); Berson, Emile Emanuel Henri, 61190 Tourouvre (FR); Pinchon, Michelle Roberte Marie, 92300 Levallois-Perret (FR); Szabo-Pinchon, Claudine Georgette Raymonde, 54460 Liverdun (FR); Szabo, Sandor, 54460 Liverdun (FR); Pinchon, Jean René André, 72610 Saint-Paterne (FR); Pinchon, Fabrice Paul Michel, 75017 Paris (FR)
(72) Inventeur: Pinchon, Raymond, (FR)
(74) Mandataire: Polus, Camille

(56) Documents cités:
- FR-A- 1 289 445
- FR-A- 1 350 818

## Description

L'invention se rapporte aux outils pour le dénudage de câbles électriques ou similaires.

On connaît des outils ayant la forme d'une pince dont les deux branches sont articulées en un point intermédiaire de leur longueur autour d'un axe commun et qui sont munies, à leurs extrémités libres, l'une d'un organe de coupe longitudinal rotatif, l'autre d'un galet de guidage à gorge trapézoïdale disposé en face de l'organe de coupe.

On connaît notamment par le brevet FR-A-2.044.600 un outil de ce type dont l'une des branches porte un organe de coupe longitudinale, fixe et l'autre porte des moyens de centrage et d'appui pour le câble, constitués par des rouleaux fous formant deux plans de roulement disposés en V. Cet outil est pourvu de moyens de blocage des deux branches de la pince l'une par rapport à l'autre dans la position d'ouverture désirée. Il comporte en outre des organes de coupe radiale portés par l'une et l'autre des deux branches ainsi que des moyens de butée destinés à limiter le rapprochement des deux branches lors de la coupe radiale.

Tous les outils connus pour le dénudage de câbles électriques ont pourtant l'inconvénient de ne pouvoir assurer une coupe longitudinale parfaitement rectiligne, ce qui rend plus difficile l'enlèvement de la gaine ou de la couche découpée.

Le but de l'invention est de proposer un outil qui pallie cet inconvénient en empêchant le vrillage du câble et en améliorant le guidage de celui-ci lors de la coupe longitudinale.

L'invention a pour objet un outil pour le dénudage de câbles électriques ou similaires, ayant la forme d'une pince dont les deux branches sont articulées en un point intermédiaire de leur longueur autour d'un axe d'articulation, et dans lequel l'extrémité d'une première branche porte un organe de coupe longitudinale comportant une lame tranchante et l'extrémité correspondante de la branche opposée porte des moyens de centrage et d'appui pour le câble, caractérisé en ce qu'il comporte des organes de guidage disposés en amont de l'organe de coupe et portés par l'une et l'autre des branches.

Selon d'autres caractéristiques de l'invention :
- les organes de guidage comportent une paire de galets opposés montés sur des axes s'étendant à peu près parallèlement à l'axe d'articulation de la pince, au moins l'un des galets ayant une forme globalement concave,
- l'un des galets de la paire de galets a une forme cylindrique, et un organe tranchant est monté à l'extrémité libre de l'axe de celui-ci, l'organe tranchant s'étendant sensiblement dans le même plan que l'organe de coupe longitudinale,
- l'organe tranchant est porté par la première branche et constitue un organe de précoupe,
- l'un des axes de galet est fixé à l'extrémité libre d'un bras monté basculant sur la branche correspondante;
- l'outil comporte un dispositif de butée réglable limitant le basculement du bras vers l'extérieur de la pince.

L'invention sera maintenant décrite plus en détail en référence au dessin annexé sur lequel :
- la figure 1 est une vue en perspective d'un outil pourvu d'une cage de guidage suivant l'invention,
- la figure 2 est une vue latérale, partiellement arrachée, d'un outil suivant l'invention.

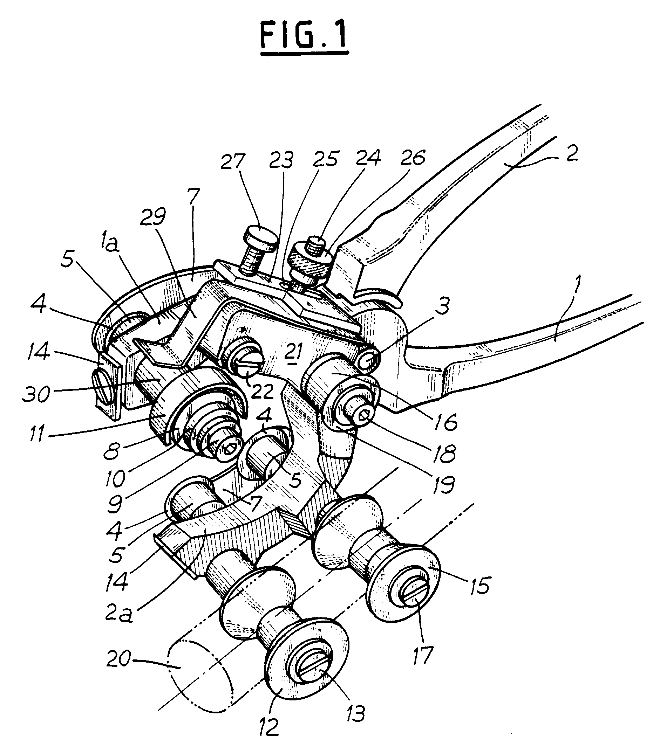

La figure 1 montre un mode de réalisation d'un outil pour le dénudage de câbles suivant l'invention. L'outil a la forme d'une pince ayant une première et une deuxième branches 1, 2, articulées autour d'un axe commun 3. Chaque branche a une partie avant formant mâchoire désignée 1a et 2a, respectivement.

L'outil est pourvu d'organes de coupe radiale 4 portés par chacune des mâchoires 1a et 1b. Les organes de coupe radiale sont constitués de lames circulaires solidaires de galets cylindriques 5 montés fous sur des axes 6 fixés latéralement à l'une et à l'autre des mâchoires. Dans l'exemple illustré sur la figure 1, chaque mâchoire porte deux organes de coupe radiale disposés en regard de deux organes portés par l'autre mâchoire. Les extrémités libres des axes 6 portés par la même mâchoire sont reliées l'une à l'autre par une plaque de protection 7.

La première mâchoire 1a porte un organe de coupe longitudinale 8 disposé latéralement du côté opposé aux organes de coupe radiale 4. L'organe de coupe longitudinale 8 est constitué d'une lame circulaire montée folle sur un axe 9 fixé à la première mâchoire 1a. Un galet cylindrique 10 est monté fou sur le même axe de part et d'autre de la lame 8. Un capot de protection 11 est porté par le même axe et s'étend autour d'une partie de la lame 8.

Des moyens de centrage et d'appui pour le câble sont disposés en regard de l'organe de coupe longitudinale 8. Ces moyens comportent un galet de guidage à gorge trapézoïdale 12 monté fou sur un axe 13 porté par la deuxième mâchoire 2a et s'étendant à peu près parallèlement à l'axe d'articulation 3 de la pince.

Une plaquette coupante 14 est fixée au bout de chacune des mâchoires 1a, 2a. Ces plaquettes sont destinées à l'ouverture de la gaine de câble sectionnée afin de faciliter son enlèvement.

L'outil selon l'invention comporte une cage de guidage pour le câble. Cette cage est, dans le mode de réalisation illustré sur la figure 1, constituée d'une paire de galets opposés 15, 16 portés par l'une et l'autre des mâchoires 2a et 1a, respectivement, et disposés en amont par rapport à l'organe de coupe longitudinale 8.

Le galet 15 est un galet globalement concave, de forme trapézoïdale, dont la partie centrale cylindrique est alignée avec la partie correspondante du galet de guidage 12. Le galet 15 est monté fou sur un axe 17 s'étendant parallèlement à l'axe 13 du galet 12. Le galet opposé de la paire de galets est un galet cylindrique 16 monté fou sur un axe 18 fixé à la première mâchoire 1a et s'étendant parallèlement à l'axe 17 du galet 15. Un organe tranchant 19 est monté à l'extrémité libre de l'axe 18 du galet cylindrique 16. Cet organe tranchant 19 est constitué d'une lame circulaire folle. La lame circulaire est portée par la même branche 1 que l'organe de coupe longitudinale 8 et s'étend sensiblement dans le même plan que celui-ci afin d'effectuer une précoupe dans un câble 20 disposé comme indiqué par des traits mixtes sur la figure 1.

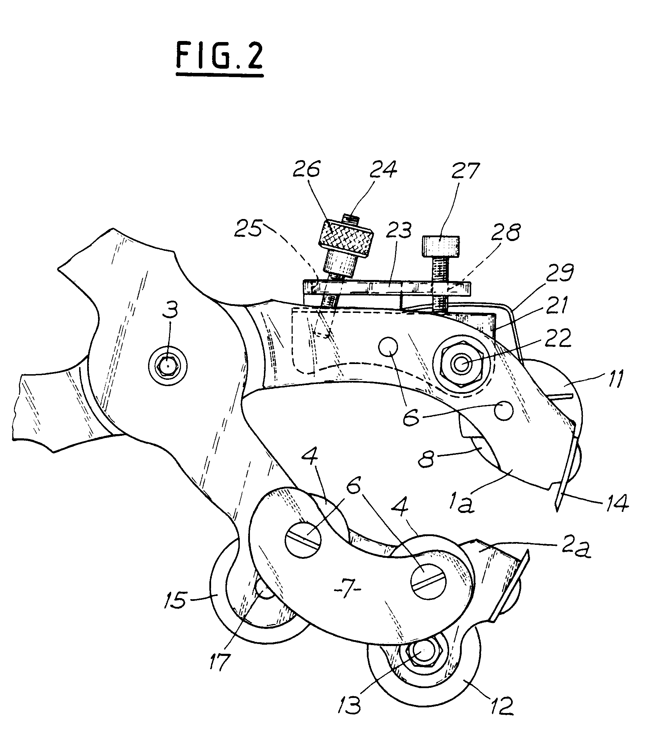

L'axe 18 qui porte le galet cylindrique 16 ainsi que la lame circulaire formant organe de précoupe, est fixé à l'extrémité libre d'un bras 21 monté basculant sur la branche 1 autour d'un axe 22. Le basculement du bras 21 vers l'extérieur de la pince est limité par un dispositif de butée réglable 23 à 26 (voir figure 2).

Le dispositif de butée réglable comporte un organe 23 solidaire du bras et faisant saillie latéralement de façon à se trouver en face de la première branche 1, une tige filetée 24 fixée dans ladite branche et traversant une lumière oblongue 25 ménagée dans l'organe en saillie 23, et un écrou moleté 26 coopérant avec la tige 24 afin de former une butée pour l'organe en saillie.

Le basculement du bras 21 vers l'intérieur de la pince est limité par un organe de butée réglable. Cet organe de butée réglable est constitué par une vis 27 vissée dans un trou taraudé traversant 28 ménagé dans l'organe en saillie 23. La vis 27 est destinée à venir en butée contre la première branche 1.

Le dispositif de butée 23 à 26 constitue avec l'organe de butée 27 un ensemble de blocage du bras 21 dans une position souhaitée.

Le bras 21 est constamment sollicité vers l'intérieur de la pince par un organe élastique 29. Cet organe élastique est, selon le mode de réalisation représenté sur les figures, constitué par un ressort à lame 29 solidaire du bras 21 et ayant une extrémité libre prenant appui sur une partie en saillie 30 de la branche 1. Cette partie en saillie porte en même temps l'axe 9 de la lame 8 de coupe longitudinale.

La position de l'écrou 26 sur la tige 24 limitant le basculement du bras 21 sert par ailleurs aussi à limiter la profondeur de coupe de l'organe de coupe longitudinale 8 étant donné que les mâchoires 1a, 2a peuvent être rapprochées l'une de l'autre jusqu'à ce que le galet cylindrique 16 vienne en butée contre le câble 20 lorsque la cage de guidage formée par les galets 15 et 16 se ferme autour de celui-ci.

Par ailleurs, la profondeur de la coupe radiale effectuée par les organes 4 peut avantageusement être réglée par des moyens de butée des deux branches l'une par rapport à l'autre, connus dans la technique antérieure et qui ne sont pas illustrés sur les figures.

Selon d'autres modes de réalisation de l'invention :
- l'organe tranchant 19 est remplacé par une molette (non représentée) ;
- la cage de guidage est inversée, ce qui veut dire que le galet trapézoïdal 15 est porté par la première branche 1 et le galet cylindrique 16 ainsi que la lame 19 sont portés par la deuxième branche 2 ;
- les deux galets 15, 16 de la paire de galets sont des galets ayant une forme globalement concave ;
- l'extrémité libre du ressort à lame prend appui sur la surface opposée de la partie en saillie 30 de la branche correspondante de sorte que le bras 21 soit sollicité vers l'extérieur de la pince ;
- le ressort à lame 29 est remplacé par un ressort en épingle monté sur l'axe de basculement 22 du bras 21 et dont l'une des extrémités prend appui sur la branche correspondante et l'autre sur le bras.

L'outil suivant l'invention fonctionne de la façon suivante. Après avoir effectué une coupe radiale dans le câble 20 à l'aide des organes de coupe radiale 4, on dispose le câble comme cela est illustré sur la figure 1. Ensuite, la branche 1 est rapprochée de la branche 2 jusqu'à ce que la lame 19 vienne en appui contre le câble. Lorsque les branches sont rapprochées davantage, la lame 19 pénètre dans la matière du câble jusqu'au moment où le galet 16 vient en appui contre le câble. Le bras 21 est en même temps basculé à l'encontre de l'action du ressort 29 de façon à venir en butée contre l'écrou 26. La profondeur de pénétration souhaitée de l'organe de coupe longitudinale 8 peut ensuite être réglée à l'aide de l'écrou 26. Le bras 21 peut être bloqué dans une position souhaitée à l'aide de la vis 27 qui est vissée jusqu'à ce qu'elle vienne en butée contre la branche 1.

Une fois que la position de butée du bras 21 vers l'extérieur de la pince a été réglée à l'aide de l'écrou 25 il est possible de dénuder toute une série de câbles ayant le même diamètre sans réglage intermédiaire.

Ensuite, on tire l'outil le long du tronçon de câble à dénuder de sorte que la lame 19 effectue une précoupe dans le plan de coupe de la lame de coupe longitudinale 8 qui suit ainsi la précoupe afin d'effectuer la coupe souhaitée.

Selon les autres modes de réalisation de l'invention, le basculement du bras 21 vers l'extérieur de la pince est réglé de la même façon afin d'obtenir un guidage optimal dans la cage de guidage.

L'outil selon l'invention permet ainsi d'effectuer une coupe longitudinale à peu près rectiligne d'un câble ou d'une série de câbles ayant le même diamètre après avoir effectué un seul préréglage.

## Revendications

1. Outil pour le dénudage de câbles électriques ou similaires, ayant la forme d'une pince dont les deux branches (1, 2) sont articulées en un point intermédiaire de leur longueur autour d'un axe d'articulation (3), et dans lequel l'extrémité d'une première branche (1) porte un organe de coupe longitudinale comportant une lame tranchante (8) et l'extrémité correspondante de la branche opposée porte des moyens de centrage et d'appui (12) pour le câble, caractérisé en ce qu'il comporte des organes de guidage (15, 16, 19) disposés en amont de l'organe de coupe (8) et portés par l'une et l'autre des branches (1, 2).

2. Outil suivant la revendication 1 , caractérisé en ce que les organes de guidage comportent une paire de galets (15, 16) opposés montés sur des axes (17, 18) s'étendant à peu près parallèlement à l'axe d'articulation (3) de la pince, et en ce qu'au moins l'un (15) des galets a une forme globalement concave.

3. Outil suivant la revendication 2, caractérisé en ce que les deux galets (15, 16) de la paire de galets ont une forme globalement concave.

4. Outil suivant la revendication 2, caractérisé en ce que l'un (16) des galets de la paire de galets a une forme cylindrique, et en ce qu'un organe tranchant (19) est monté à l'extrémité libre de l'axe (18) de celui-ci, l'organe tranchant (19) s'étendant sensiblement dans le même plan que l'organe de coupe longitudinale (8).

5. Outil suivant la revendication 4, caractérisé en ce que l'organe tranchant (19) est porté par la première branche (1) et constitue un organe de précoupe.

6. Outil suivant la revendication 5, caractérisé en ce que l'organe de précoupe (19) est constitué d'une lame circulaire montée folle.

7. Outil suivant la revendication 2, caractérisé en ce que l'un (16) des galets de la paire de galets a une forme cylindrique, et en ce qu'une molette est montée à l'extrémité libre de l'axe de celui-ci, la molette s'étendant dans le plan de l'organe de coupe longitudinale (8).

8. Outil suivant l'une quelconque des revendications 2 à 7, caractérisé en ce que l'un (18) des axes de galet est fixé à l'extrémité libre d'un bras (21) monté basculant sur la branche correspondante (1), et en ce qu'il comporte un dispositif de butée réglable (23 à 26) limitant le basculement du bras (21) vers l'extérieur de la pince.

9. Outil suivant la revendication 8, caractérisé en ce que le dispositif de butée réglable comporte un organe (23) solidaire du bras (21) et faisant saillie latéralement de façon à se trouver en face de la branche correspondante (1) , une tige filetée (24) fixée dans ladite branche (1) et traversant une lumière oblongue (25) ménagée dans l'organe formant saillie (23) , et un écrou (26) coopérant avec la tige (24) afin de former butée pour l'organe en saillie (23).

10. Outil suivant la revendication 8 ou 9, caractérisé en ce qu'il comporte un organe élastique (29) sollicitant le bras (21) vers l'intérieur de la pince.

11. Outil suivant la revendication 8 ou 9, caractérisé en ce qu'il comporte un organe élastique sollicitant le bras (21) vers l'extérieur de la pince.

12. Outil suivant la revendication 10 ou 11, caractérisé en ce que l'organe élastique est un ressort à lame (29) solidaire du bras (21) et ayant une extrémité libre prenant appui sur la branche correspondante (1).

13. Outil suivant la revendication 10 ou 11, caractérisé en ce que l'organe élastique est un ressort en épingle monté sur l'axe de basculement (22) du bras (21) et dont l'une des extrémités prend appui sur le bras et l'autre sur la branche correspondante (1).

14. Outil suivant l'une quelconque des revendications 8 à 13, caractérisé en ce qu'il comporte en outre un organe de butée réglable (27) limitant le basculement du bras (21) vers l'intérieur de la pince.

15. Outil suivant la revendication 14, caractérisé en ce que l'organe de butée est constitué par une vis vissée dans un trou taraudé traversant (28) ménagé dans ledit organe en saillie (23), et qui vient en butée contre la branche correspondante (1) lors du basculement du bras (21) vers l'intérieur de la pince.

## Patentansprüche

1. Werkzeug zum Entmanteln von elektrischen Kabeln oder dergleichen, in der Form einer Zange, deren beide Arme (1,2) in einem Punkt im Mittelbe reich ihrer Länge um eine Schwenkachse (3) gelenkig verbunden sind, und bei dem das Ende eines ersten Armes (1) ein Längsschneideorgan mit einem Schneidblatt (8) und das entsprechende Ende des gegenüberliegenden Armes eine Zentrier- und Anlageeinrichtung (12) für das Kabel trägt, dadurch **gekennzeichnet,** daß es Führungsorgane (15,16,19) aufweist, die vor dem Schneidorgan (8) angeordnet sind und durch den einen und den anderen Arm (1,2) getragen werden.

2. Werkzeug nach Anspruch 1, dadurch **gekennzeichnet,** daß die Führungsorgane zwei gegenüberliegende Rollen (15,16) umfassen, die auf Achsen (17,18) angebracht sind, die sich etwa parallel zu der Schwenkachse (3) der Zange erstrecken, und daß wenigstens eine der Rollen (15) eine insgesamt konkave Form aufweist.

3. Werkzeug nach Anspruch 2, dadurch **gekennzeichnet,** daß die beiden Rollen (15,16) des Rollenpaares eine insgesamt konkave Form aufweisen.

4. Werkzeug nach Anspruch 2, dadurch **gekennzeichnet,** daß die eine Rolle (16) des Rollenpaares eine zylindrische Form aufweist, und daß ein Schneidorgan (19) am freien Ende der Achse (18) der Rolle angeordnet ist und sich im wesentlichen in derselben Ebene erstreckt wie das Längsschnittorgan (8).

5. Werkzeug nach Anspruch 4, dadurch **gekennzeichnet,** daß das Schneidorgan (19) durch den ersten Arm (1) getragen wird und ein Vorschneideorgan bildet.

6. Werkzeug nach Anspruch 5, dadurch **gekennzeichnet,** daß das Vorschneideorgan (19) durch eine kreisförmige, lose montierte Scheibe gebildet ist.

7. Werkzeug nach Anspruch 2, dadurch **gekennzeichnet,** daß eine der Rollen (16) des Rollenpaares eine zylindrische Form aufweist, und daß eine Scheibe am freien Ende der Achse der Rolle angebracht ist, die sich in der Ebene des Längsschneideorgans (8) erstreckt.

8. Werkzeug nach einem der Ansprüche 2 bis 7, dadurch **gekennzeichnet,** daß eine der Achsen (18) der Rollen am freien Ende eines Armes (21) montiert ist, der schwenkbar an dem entsprechenden Arm (1) angebracht ist, und daß es eine einstellbare Anschlageinrichtung (23,26) aufweist, die die Schwenkbewegung des Armes (21) zum Äußeren der Zange begrenzt.

9. Werkzeug nach Anspruch 8, dadurch **gekennzeichnet,** daß die einstellbare Anschlageinrichtung ein mit dem Arm (21) fest verbundenes Organ (23) aufweist, das seitlich derart vorspringt, daß es sich gegenüber dem entsprechenden Arm (1) befindet, eine Gewindestange (24), die am dem Arm (21) befestigt ist und ein Langloch (25) in dem vorspringenden Organ (23) durchläuft, und eine Mutter (26), die mit der Gewindestange (24) zusammenwirkt und den Anschlag für das vorspringende Organ (23) bildet, umfaßt.

10. Werkzeug nach Anspruch 8 oder 9, dadurch **gekennzeichnet,** daß es ein elastisches Organ (29) umfaßt, das den Arm (21) zum Inneren der Zange vorspannt.

11. Werkzeug nach einem der Ansprüche 8 oder 9, dadurch **gekennzeichnet,** daß es ein elastisches Organ umfaßt, das den Arm (21) zum Äußeren der Zange vorspannt.

12. Werkzeug nach einem der Ansprüche 10 oder 11, dadurch **gekennzeichnet,** daß das elastische Organ eine Blattfeder (29) ist, die fest mit dem Arm (21) verbunden ist und ein freies Ende aufweist, das gegen den entsprechenden Arm (1) anliegt.

13. Werkzeug nach Anspruch 10 oder 11, dadurch **gekennzeichnet,** daß das elastische Organ eine Schenkelfeder ist, die auf der Schwenkachse (22) des Armes (21) montiert ist und deren eines Ende gegen den Arm und deren anderes Ende gegen den entsprechenden Arm (1) anliegt.

14. Werkzeug nach einem der Ansprüche 8 bis 13, dadurch **gekennzeichnet,** daß es im übrigen ein einstellbares Anschlagorgan (27) umfaßt, das die Schwenkbewegung des Armes (21) um Inneren der Zange begrenzt.

15. Werkzeug nach Anspruch 14, dadurch **gekennzeichnet,** daß das Anschlagorgan gebildet ist durch eine Schraube, die durchgehend in eine Gewindebohrung (28) eingeschraubt ist, die in dem vorspringenden Organ (23) ausgebildet ist, und die anschlägt gegen den entsprechenden Arm (21) bei der Schwenkbewegung des Armes (21) zum Inneren der Zange.

## Claims

1. Tool for stripping electrical or similar cables in the form of pincers, the two handles (1, 2) of which are articulated at an intermediate point on their length about a hinge pin (3), and in which the end of a first handle (1) carries a longitudinal cutting element comprising a sharp-edged blade (8) and the corresponding end of the opposite handle carries means (12) for centring and supporting the cable, characterized in that it comprises guide elements (15, 16, 19) which are arranged upstream of the cutting element (8) and which are carried by each of the handles (1, 2).

2. Tool according to claim 1, characterized in that the guide elements comprise a pair of opposite rollers (15, 16) which are mounted on spindles (17, 18) which extend approximately parallel to the hinge pin (3) of the pincers, and in that at least one (15) of the rollers has an overall concave shape.

3. Tool according to claim 2, characterized in that both rollers (15, 16) of the pair of rollers have an overall concave shape.

4. Tool according to claim 2, characterized in that one (16) of the rollers of the pair of rollers has a cylindrical shape, and in that a sharp-edged element (19) is mounted at the free end of the spindle (18) of the latter, the sharp-edged element (19) extending substantially in the same plane as the longitudinal cutting element (8).

5. Tool according to claim 4, characterized in that the sharp-edged element (19) is carried by the first handle (1) and forms a preliminary cutting element.

6. Tool according to claim 5, characterized in that the preliminary cutting element (19) consists of a circular blade mounted so as to fit loosely.

7. Tool according to claim 2, characterized in that one (16) of the rollers of the pair of rollers has a cylindrical shape, and in that a wheel is mounted at the free end of the spindle of the latter, the wheel extending in the plane of the longitudinal cutting element (8).

8. Tool according to any one of claims 2 to 7, characterized in that one (18) of the roller spindles is fixed to the free end of an arm (21) mounted on the corresponding handle (1) so as to tilt, and in that it comprises an adjustable stop device (23 to 26) which limits the tilting of the arm (21) towards the outside of the pincers.

9. Tool according to claim 8, characterized in that the adjustable stop device comprises an element (23) which is integral with the arm (21) and which projects laterally so as to face the corresponding handle (1), a screw rod (24) which is fixed in the said handle (1) and passes through an oblong slot (25) provided in the projecting element (23), and a nut (26) which cooperates with the rod (24) so as to form an abutment for the projecting element (23).

10. Tool according to claim 8 or 9, characterized in that it comprises a resilient element (29) which stresses the arm (21) towards the inside of the pincers.

11. Tool according to claim 8 or 9, characterized in that it comprises a resilient element which stresses the arm (21) towards the outside of the pincers.

12. Tool according to claim 10 or 11, characterized in that the resilient element is a leaf spring (29) which is integral with the arm (21) and has a free end which bears against the corresponding handle (1).

13. Tool according to claim 10 or 11, characterized in that the resilient element is a kickover spring which is mounted on the tilting spindle (22) of the arm (21) and one end of which bears against the arm and the other against the corresponding handle (1).

14. Tool according to any one of claims 8 to 13, characterized in that it also comprises an adjustable stop element (27) which limits the tilting of the arm (21) towards the inside of the pincers.

15. Tool according to claim 14, characterized in that the stop element consists of a screw which is screwed into a threaded throughhole (28) provided in the said projecting element (23) and which abuts the corresponding handle (1) when the arm (21) tilts towards the inside of the pincers.
